# EUROPÄISCHE PATENTSCHRIFT

(11) **EP 1 704 990 B1**
(45) Veröffentlichungstag und Bekanntmachung des Hinweises auf die Patenterteilung: **16.11.2011**
(21) Anmeldenummer: 05405265.9
(22) Anmeldetag: 23.03.2005
(51) Int. Cl.: B29C 70/48, B29C 70/86, B29D 99/00

(54) **Ventilatoren-Propellerflügels und Verfahren zu seiner Herstellung**
Ventilator propeller blade and method of its fabrication
Pale d'hélice de ventilateur et méthode de sa fabrication

(43) Veröffentlichungstag der Anmeldung: 27.09.2006
(73) Patentinhaber: 3A Technology & Management AG, 8212 Neuhausen am Rheinfall (CH)
(72) Erfinder: Anderegg, Kurt, 9424 Rheineck (CH); Wilde, Dirk, 9444 Diepoldsau (CH)

(56) Entgegenhaltungen:
- US-A- 4 626 172
- US-A- 4 696 623
- US-A1- 2002 038 923
- US-B1- 6 227 805
- US-B1- 6 231 941
- MCCARTHY R F J ET AL: "POLYMER COMPOSITE APPLICATIONS TO AEROSPACE EQUIPMENT" COMPOSITES MANUFACTURING, BUTTERWORTH SCIENTIFIC, GUILDFORD, SURREY, GB, Bd. 5, Nr. 2, 1. Juni 1994 (1994-06-01), Seiten 83-93, XP000450078 ISSN: 0956-7143

## Beschreibung

Vorliegende Erfindung betrifft einen Ventilatoren-Propollerflügel gemäss dem Oberbegriff von Anspruch 1 und ein Verfahren zu dessen Herstellung, vgl. die US-A-6227805.

Belüftungsanlagen für Wärmetauscher oder zur Grossraumklimatisierung werden In der Regel mit niedrigtourigen Ventilatoren, auch Axlalgebläse genannt, ausgestattet, welche mittels Propeller, auch Lüfterrad, Luftschraube oder Schaufelrad bezeichnet, betrieben werden. Diese Ventilatoren arbeiten schallarm und eignen sich daher besonders gut für Anwendungen, bei welchen ein geräuscharmer Betrieb erwünscht ist.

Ein Propeller enthält jeweils eine Mehrzahl von um eine Welle angeordnete Propellerflügel. An solche Propellerflügel sind hohe Anforderungen gestellt. Hinsichtlich ihrer dynamisch-mechanischen Eigenschaften sollen die Propeller im Drehzahlbereich von 300 bis 500 U/min (Umdrehungen pro Minute) arbeiten. Somit treten am Propellerflügel im Betrieb durch Zentrifugalkräfte verursachte Zugspannungen und durch die Luftförderung erzeugte Biegespannungen auf.

Überdies sollen die Propellerflügel witterungsbeständig, insbesondere feuchte- und UV-beständig sein. Die Temperaturbeständigkeit soll von ca. -20° C bis ca. 100°C reichen. Ferner sollen sie auch chemisch beständig sein, d.h. geringe Korrosion und eine hohe Lebensdauer aufweisen.

Möglichst geringe Unwuchten sollen im weiteren eine grosse Laufruhe und einen verschleissarmen sowie sparsamen Betrieb der Propeller garantieren, wobei die Propellerflügel zwecks Energieeinsparung ein möglichst geringes Gewicht aufzuweisen haben.

Es ist bekannt, Propellerflügel aus faserverstärktem Kunststoff, bsp. aus glasfaserverstärktem Polyester, herzustellen. Dazu werden die Propellerflügel als untere und obere Halbschalen mittels Handlamination in Aussenformen gefertigt. Die beiden Halbschalen werden hernach unter Ausbildung einer Hohlkammer mittels Kleben und Überlaminieren der Fügenaht zu einem Propellerflügel gefügt.

Diese Technik weist den Nachteil auf, dass die Wanddicken sowie der Fasergehalt durch die Handlamination nicht genau reproduzierbar sind. Die Folge sind Gewichtsunterschiede zwischen den einzelnen Propellerflügeln, was zu Unwuchten im Propeller führt, die wiederum durch aufwändige Massnahmen beseitigt werden müssen.

So werden in der Regel zum Ausgleichen der Unwuchten Ausgleichsgewichte angebracht, welche wiederum zu einer Gewichtserhöhung führen. Die Ausgleichsgewichte werden in der Regel im Flügelhohlraum montiert, da nur auf diese Weise die durch die grossen Unwuchten der Flügel erzeugten Störungsschwingungen an den Propellerflügeln reduziert werden können. Dazu müssen die Schalenwände jedoch durchbrochen und durch Stopfen wieder verschlossen werden, was weitere Undichtigkeiten im Propellerflügel mit sich führen kann.

Handlamination erfordert ferner viel Handarbeit bei einem geringen Automationsgrad, was hohe Kosten und Durchlaufzeiten bedeutet. Die erforderliche Steifigkeit, welche ein Propellerflügel aufweisen muss, führt überdies zu grossen Wanddicken und somit zu einem hohen Bauteilgewicht und demzufolge zu einer hohen Massenträgheit. Die Verklebung beider Halbschalen ist aufwändig und ebenfalls nicht exakt reproduzierbar. Es ist zudem schwierig eine vollständige Dichtheit der Fügenähte zu erreichen. Die Folge sind Eindringen von Wasser bzw. Wasserdampf in die Hohlkammer und somit weitere Gewichtsunterschiede zwischen den einzelnen Propellerflügeln. Eingedrungenes Wasser oder Eisbildung im Hohlraum kann ferner zu unerwünschten Vibrationen und Resonanzen führen. Fügenähte sind überdies potentielle strukturelle Schwachstellen und neigen z.B. zu Alterungs- und Belastungs-bedingter Rissbildung.

Zur Entwässerung sind Bohrungen an der Aussenseite des Propellerflügels notwendig. Diese sind nur im Rotationsbetrieb wirksam und können Ursache von Pfeifgeräuschen sein. Im Stillstand kann ausserdem durch diese Bohrungen wieder Wasser eintreten.

Im Propellerschaft muss ferner ein druckfester Kern eingesetzt werden, welcher die Einspannkräfte aufnimmt. Die üblicherweise verwendeten Sandkerne sind jedoch vergleichsweise schwer.

Aufgabe vorliegender Erfindung ist es deshalb, einen kostengünstlg herzustellenden Faserverbund-Propelleffiügel von hoher Qualität und geringen Mass- und Formtoleranzen sowie ein Verfahren zu dessen serienmässiger Herstellung vorzuschlagen.

Erfindungsgemäss wird die Aufgabe durch einen Propellerflügel mit den Merkmalen von Anspruch 1 und ein Verfahren mit den Merkmalen von Anspruch 2 gelöst. Bevorzugte Ausführungsformen des Verfahrens sind in den Ansprüchen 3 bis 8 beschrieben.

Der Leichtbaukem enthält bevorzugt eine Zellstruktur, insbesondere eine geschlossene Zellstruktur. Der Leichtbaukem kann bsp. aus einem Schaumstoff, aus einem Metall-, insbesondere Aluminiumschaum, aus einem Leichtholz, wie Balsaholz, oder einem Wabenkem aus bsp. Metall, wie Aluminium, oder aus Kunststoff sein.

Der Schaumstoffkern kann aus PUR (Polyurethan) oder einem anderen geeigneten, schäumbaren Kunststoff, wie Polyvinylchlorid (PVC) oder aus einem Polyolefin, wie Polypropylen (PP) bestehen. Die Druckfestigkeit und Steifigkeit werden auf den Injektionsdruck mit dem der flüssige Kunststoff in das Formwerkzeug eingelassen wird, abgestimmt, damit es zu keiner unzulässigen Verformung des Schaumstoffkems kommt. Der Schaumstoffkern ist bevorzugt aus einem Hartschaum.

Der Leichtbaukern kann bsp. in einem Formwerkzeug in seine definitive Form oder in eine Vorform geschäumt werden. Der Leichtbaukem kann aber auch aus einem Vollkörper in die definitive Geometrie oder eine Vorform herausgearbeitet werden. Dies geschieht bsp. mittels Fräsen.

Das Herstellungsverfahren ist bevorzugt ein RTM-Verfahren (= Resin-Transfer-Molding-Verfahren) oder ein dem RTM-Verfahren verwandtes VARI-Verfahren (= Vacuum Assisted Resin Infusion) bzw. VARTM-Verfahren (Vacuum Assisted Resin-Transfer-Molding-Verfahren), bei welchem das reaktive Ausgangsgemisch mittels Vakuumunterstützung in das Formwerkzeug injiziert wird. Das Verfahren kann auch ein reines Vakuuminjektionsverfahren sein, bei welchem das Harz alleine durch das angelegte Vakuum und ohne Druckunterstützung durch die Fasern fliesst. Ferner kann das Herstellungsvefahren auch eine Variante des RTM-Verfahrens sein, wie z.B. ein TERTM (Thermal-Expanded-Resin-Transfer-Molding) Verfahren.

Beim Harz-Injektionsverfahren kann es sich überdies auch um ein RIM (Reaction-Injection-Molding) bzw. S-RIM (Structural-Reaction-Injection-Molding) Verfahren handeln.

Die vorgenannten Verfahren sind soweit in der Fachwelt bekannt und werden daher nicht näher erläutert. Das RTM-Verfahren wird bsp. in "Kötte, 'Der Resin-Transfer-Molding-Prozess', Verlag TÜV Rheinland, 1991, S. 3-16" näher beschrieben.

Die Herstellung des Propollerflügels erfolgt vorzugsweise mittels eines zweiteiligen Formwerkzeuges, welches im geschlossenen Zustand eine Werkzeugkavität einschliesst. Die Werkzeugkavität bildet dabei die Aussenkontur des herzustellenden Propellerflügels ab.

Das Formwerkzeug kann aus einem Metall oder Metalllegierung wie Aluminium, Stahl, Chrom, Chromstahl, Nickel, sowie aus Teflon® oder Nickel-Tefion® sein. Das Formwerkzeug kann ferner aus Kunststoff bzw. verstärktem Kunststoff oder einem keramischen Werkstoff bestehen, Das Formwerkzeug bzw. die Wandung der Formwerkzeugkavität ist vorzugsweise beheizbar.

Zu Beginn des Verfahrens wird die Werkzeugkavität des geöffneten Formwerkzeuges mit dem mit den Verstärkungsfasern beschichteten Leichtbaukern, belegt.

Der Leichtbaukem weist bevorzugt eine im wesentlichen den Propellerflügel wiedergebende Form mit einer gegenüber dem Propellerflügel um das Mass der späteren Flügelwanddicke reduzierten Abmessung auf.

Die Geometrie des Leichtbaukerns kann so ausgelegt sein, dass sich die Anzahl Lagen von Verstärkungsfasern variieren lässt. Auf diese Weise kann die im Injektionsprozess zu erzeugende Flügelwand entsprechend der Bauteilbeanspruchung abschnittsweise unterschiedlich dick ausgeführt werden. Dazu kann bsp. die Oberfläche des Leichtbaukerns entsprechend der zu erzielenden Laminatdicke unterschiedliche Höhenniveaus aufweisen.

Der Leichtbaukem wird vorzugsweise in seiner endgültigen Form, d.h. bsp. vollständig aufgeschäumt, in die Kavität des Formwerkzeuges eingelegt. Leichtbaukerne in Form von Schaumstoffkernen können jedoch auch erst in der Formwerkzeugkavität während des Herstellungsprozesses in ihre endgültige Form aufschäumen (TERTM-Verfahren).

Der Leichtbaukem ist zweckmässig flüssigkeitsundurchlässig und geschlossenzellig. Der Leichtbaukern weist bsp. eine Dichte von 30 - 110 kg/m³, vorzugsweise von 60 - 80 kg/m³ auf.

Der Leichtbaukern kann einstückig oder mehrteilig gefertigt werden. Der Leichtbaukern kann bsp. zweiteilig aus einem Blattteil und einem Schaftteil gefertigt sein. Der Leichtbaukem füllt die Kammer des Propellerflügels vorzugsweise vollständig aus, Es ist jedoch auch denkbar, dass die Kammer nur partiell durch einen oder mehrere Leichtbaukerne ausgefüllt wird. Die Kammer kann eine offene oder eine geschlossene Kammer sein. Die Kammer ist bevorzugt eine vollständig von der faserverstärkten Kunststoffwand umgebene, geschlossene Kammer.

Der Leichtbaukem kann in verschiedenen Bereichen unterschiedliche Dichten aufweisen. So kann bsp. der Schaftteil zur Verstärkung der Krafteinleitungsstelle eine höhere Dichte aufweisen als der Blattbereich. Die Herstellung eines Leichtbaukerns mit unterschiedlichen Dichten kann durch Anfertigung mehrteiliger Leichtbaukernelemente wie oben beschrieben erfolgen. Einstückige Leichtbaukerne aus Schaumstoff mit bereichsweise unterschiedlichen Dichten lassen sich mittels gesteuerter Prozessführung herstellen. Ferner können auch versteifend wirkende Einlegeteile in das Schäumwerkzeug eingelegt oder in den Leichtbaukem eingearbeitet werden. Dies können, wie nachfolgend beschrieben, bsp. Hülsen oder Halbschalen im Schaftbereich oder komplette Schaftteile aus bsp. (ungeschäumtem) Kunststoff sein.

Der Leichtbaukem wird vorzugsweise mit konfektionierten Verstärkungsfasern in Form ein- oder mehrlagiger, textiler Flächengebilde gemäss eines Lageplans auf der Ober- und Unterseite der Blattfläche überlappend belegt. Zwecks kontinuierlichem und dichtem Übergang zwischen der oberen und unteren Decklage wird zuvor an der Stirnseite ein konfektionierter Faserstreifen in Form eines ein- oder mehrlagigen, textilen Flächengebildes angelegt, welcher mit den Faserlagen der Ober- und Unterseite der Blattfläche einen Überlappungsbereich ausbildet. Die Faserstreifen werden bevorzugt in eine nutförmige Vertiefung im Leichtbaukern eingelegt.

Die Blattflächen werden zum Schaft hin bevorzugt durch zusätzliche Faserlagen und unter Zunahme der Flügelwanddicke kontinuierlich oder stufenweise verstärkt.

Im Schaftbereich wird bevorzugt ein Schlauchgelege in Form eines ein- oder mehrlagigen, textilen Flächengebildes auf den Schaft des Leichtbaukerns aufgezogen. Das Schlauchgelege wird bevorzugt überlappend mit der Belegung der Propellerblätter angelegt. Dadurch werden im festigkeitsmässig kritischen Übergangsquerschnitt zwischen Propellerschaft und Propellerblatt die erforderliche mechanischen Festigkeiten erreicht.

Neben der lokalen Verstärkung von hochbeanspruchten Bereichen mittels zusätzlichen Faserlagen kann eine Verstärkung auch durch den Einsatz von anderen, höherfesten Fasern geschehen. Ferner kann der Kraftverlauf im Bauteil durch die gezielte Festlegung der Faserrichtung in den Fasergelegen optimiert werden. In Richtung des Kraftverlaufs können zusätzliche Bänder aus Verstärkungsfasern eingesetzt werden.

Die Fasergelege sind bevorzugt unter Einsatz von geeigneten Befestigungsmitteln an den Leichtbaukern und/oder gegeneinander fixiert. Auf diese Weise bleibt die vorgesehene Faserorientierung während des Herstellungsprozesses erhalten, was zu reproduzierbaren, guten mechanischen Eigenschaften des Bauteils führt. Die Fasergelege werden dazu vorzugsweise teil- oder vollflächig mit dem Leichtbaukem und/oder gegeneinander verklebt. Die Faserlagen können auch mittels mechanischen Befestigungsmitteln, wie Heftklammern, am Leichtbaukern befestigt sein. Ferner können die Fasergelege, insbesondere die Schlauchgelege mittels Faden am Leichtbaukern fixiert werden.

Die Verstärkungsfasern sind bevorzugt aus preiswerten Glasfasern, welche den mechanischen Anforderungen durchaus genügen. Die Verstärkungsfasern können auch aus hochfesten, jedoch teuren Kohlenstofffasem sein. Ferner können die Fasem auch aus anderen anorganische Fasern, wie Metallfasern, aus keramischen Fasern, aus organischen Fasern, wie Kunststofffasern, z.B. Kevlar® bzw. Aramid oder aus Naturfasern, wie faserartige Silikatminerale, Jute, Sisal, Hanf, Baumwolle, Ramiefasern, sein. Die Fasergebilde können überdies aus Mischfasern hergestellt sein.

Die Verstärkungsfasern liegen in Form von textilen Flächengebilden wie Vliese, nichtmaschenbildenden Systemen, wie Gewebe, uni- oder bidirektionale Gelege, Geflechte usw. oder maschenbildenden Systemen, wie Gestricke oder Gewirke vor. Die Textilen Flächengebilde sind bevorzugt aus gerichteten Fasern, insbesondere aus Langfasem mit Faserlängen von vorzugsweise länger als 30 mm hergestellt. Die Fasergebilde können als trockene oder vorbenetzte bzw. mit einem Binder imprägnierte Fasergebilde vorliegen.

Die konfektionierten Fasergebilde können zu sogenannten Faserrohlingen oder Preforms z.B. in Form von Schalenelementen vorgeformt sein. Dies kann z.B. mit Hilfe einer Vorformanlage geschehen, in welcher die Faserrohlinge passgenau in gewünschter, dem Bauteil angepasster Form hergestellt werden. Die Faserrohlinge bzw. Fasergebilde können vor dem Einlegen in das Formwerkzeug, zwecks Verbesserung der Durchtränkung mit der Kunststoffmatrix, vorbenetzt sein.

Das Formwerkzeug kann neben einem Leichtbaukern und Verstärkungsfasern noch mit weiteren Komponenten beschickt werden. So können bsp. Einlegeteile, auch Inserts genannt, aus bsp. einem Metall in das Formwerkzeug eingelegt werden. Die Einlegeteile können auch bereits in den Leichtbaukem eingeschäumt oder in diesen eingelassen sein und mit diesem zusammen in die Werkzeugkavität eingelegt werden. Einlegeteile können wie nachfolgend beschrieben zur Verstärkung des Einspannbereichs des Schaftes eingesetzt werden.

Nach dem Beschicken des Formwerkzeugs mit den oben genannten Komponenten wird dieses geschlossen. In die Formwerkzeugkavität des geschlossenen Formwerkzeuges wird anschliessend eine Kunststoffmatrix injiziert.

Die Kunststoffmatrix kann aus einem duroplastischen oder thermoplastischen Kunststoff bestehen. Mittlerweile lassen sich neben duroplastischen Harzen auch thermoplastische Kunststoffe mittels Harz-Injektions-Verfahren, insbesondere mittels RTM- und VARI-Verfahren, verarbeiten. Kommen jedoch Schaumstoffkerne zum Einsatz, so werden wegen der beschränkten Temperaturbeständigkeit der Schaumstoffkerne zweckmässig duroplatische Kunststoffe verarbeitet.

Duroplastische Systeme können Ein- oder Mehrkomponenten-Systeme, insbesondere Zweikomponenten-Systeme, sein, bei welchen der Härtungsvorgang durch Mischen der Komponenten initiiert wird. Die Kunststoffmatrix kann ein Harzsystem aus der Reihe der Polymerisationsharze, wie ungesättige Polyesterharze (UP) oder Methacrylate und insbesondere Vinylesterharze (VE), oder der Polyadditions- bzw. Polykondensationsharze, wie Epoxidharze, Phenolharze oder Polyimide.

Thermoplatische Kunststoffsysteme, die zur Verarbeitung mittels Harz-Injektions-Verfahren geeignet sind, können bsp. Poly(butylenterephthalat)-(PBT)-Polymersystem oder ein Polyamid-(PA)-Polymersystem, wie Polyamid-12 (PA12), sein.

Ausgangskomponenten zur Herstellung von PBT-Polymersysteme sind bsp. zyklische Oligomere des PBT (CPBT), insbesondere CBT™ (Cyclic Butylene Terephthalate). Ausgangskomponenten zur Herstellung von PA-Polymersysteme sind bsp. Laktame, wie LaktaM-12.

Die Kunststoffmatrix kann überdies noch Additive enthalten, wie flammhemmende Stoffe oder chemische Zusätze zur Gewährleistung der UV-Stabilität.

In bevorzugter Ausführung besteht die Laminatschicht aus einem glasfaserverstärkten Vinylester.

Die Kunststoffmatrix wird in einem niedrig-viskosen und leicht injizierbaren Zustand in das Formwerkzeug eingebracht. Zur Optimierung des Harzflusses und zur beschleunigten Beseitigung der Gase aus der Formwerkzeugkavität kann auf der Austrittsseite während des Injiziervorganges ein Unterdruck bzw. Vakuum erzeugt werden.

Das Formwerkzeug bzw. die Wandung der Formwerkzeugkavität wird während des Injiziervorganges vorzugsweise beheizt und auf eine Temperatur zwischen 20°C und 100°C gebracht.

Die Kunststoffmatrix wird vorzugsweise mit einer Temperatur zwischen 20°C, und 100°C in die Formwerkzeugkavität injiziert. Die Injektionsdrücke können bis 20 bar betragen.

Der Harzdurchfluss geschieht zweckmässig in Querstromfahrweise, wobei die Zufuhr der Kunststoffmatrix in die Formwerkzeugkavität über eine oder mehrere Injektionsdüsen erfolgen kann. Lage und Anzahl der Ein- und Austrittsleitungen werden so gewählt, dass die Verstärkungsfasern vollständig getränkt werden und sich keine Lufteinschlüsse bilden können.

Der Propellerflügel wird nach Abschluss des Injiziervorgangs bei erhöhter Temperaturen ausgehärtet bzw. polymerisiert und nach Erreichen der Formstabilität entformt. Abhängig von der verwendeten Kunststoffmatrix muss der entformte Propellerflügel gegebenenfalls noch einem Tempern unterzogen werden.

Die Flügelwand des Propellerflügels weist bevorzugt einen Faservolumengehalt von über 20%, vorzugsweise von über 30% und insbesondere von über 40% und von zweckmässig weniger als 70%, vorzugsweise von weniger als 60%, insbesondere von weniger als 50%, auf.

Das Verfahren eignet sich zur Herstellung von Propellerflügeln verschiedenster Abmessungen. Die mit erfindungsgemässen Propellerflügeln ausgerüsteten Propeller können bsp. einen Durchmesser von 0.4 bis 20 m aufweisen. Die Laminatdicke der Propellerflügel beträgt bsp. mehrere Millimeter.

Die Flügelwand ist zwecks Aufnahme der hohen Einspannkräfte im Einspannbereich des Schaftes bevorzugt am mächtigsten ausgebildet. Der Einspannbereich des Schaftes kann zusätzlich mit Hülsen, insbesondere Metallhülsen, verstärkt sein. Die Hülsen werden bsp. vor dem Herstellungsprozess am Leichtbaukem angebracht bzw. in diesen eingearbeitet. Anstelle von Hülsen können auch Schalen, z.B. Halbschalen, verwendet werden, welche bsp. nachträglich auf den Einspannbereich des Leichtbaukerns aufgesetzt werden. Liegen die Leichtbaukeme als Schaumstoffkerne vor so können die Hülsen oder Halbschalen, Schalen auch während des Schäumprozesses in den Schaumstoffkern integriert werden. Der Leichtbaukem weist im Schaftbereich bevorzugt einen um die Wanddicken der Hülse geringeren Querschnittsdurchmesser auf.

Der Ventilator muss nach der Montage aller Bauteile ausgewuchtet werden. Dazu kann es notwendig sein, dass an den Propellerflügeln oder an der Halterung (siehe unten) Auswuchtgewichte angebracht werden müssen. Dies kann dadurch geschehen, indem am Propellerflügel an der notwendigen Stelle eine Ausnehmung, bsp. in Form einer Bohrung, angebracht und das Auswuchtgewicht, z.B. ein Metallbolzen, in die Ausnehmung gesteckt bzw. in den Leichtbaukem eingepresst wird. Das Auswuchtgewicht kann mittels eines Klebstoffs in der Ausnehmung fixiert werden. Gleichzeitig kann mit dem Klebstoff das Loch aufgefüllt und eben mit der Oberfläche verschlossen werden.

Die Auswuchtgewichte können auch aussenseitig auf das Propellerblatt aufgeklebt werden. In diesem Fall sind die Auswuchtgewichte zweckmässig von flacher Gestalt.

Das Propellerblatt lässt sich dank dem Harz-Injektions-Verfahren serienmässig als einteiliger Vollkörper in Sandwich-Bauweise fertigen, bei welchem alle notwendigen Verstärkungen bereits integriert sind. Das erfindungsgemässe Verfahren ist rationell und kostengünstig, da es sich durch einen geringen Handarbeitsanteil und einen hohen Automationsgrad sowie durch hohe Taktraten auszeichnet. Ferner erlaubt diese Herstellungsweise die integrierte Verstärkung bzw. Versteifung des Bauteils, bsp. durch gezielte Wandverdickung in hochbeanspruchten Bereichen, sowie die Integration von Einlegeteilen, z.B. aus Metall, wie Stahl oder Aluminium, oder aus Kunststoff. Einteilig bedeutet hier fügelos, in einem Stück gefertigt.

Das erfindungsgemässe Herstellungsverfahren zeichnet sich durch eine hohe Reproduzierbarkeit hinsichtlich der geometrischen Abmessungen, der Massenverteilung, der Wanddicken, des Gewichts sowie der mechanischen Eigenschaften aus. Die Reproduzierbarkeit wird durch folgende Punkte erreicht:
- Verwendung von vorkonfektionierten, d.h. gleichmässigen Fasergebilden;
- Verwendung einer konstanten Kunststoffmenge zur Injektion ins Formwerkzeug;
- kontrollierbare Wanddicken;
- kontrollierbares Gewicht;
- reproduzierbare Leichtbaukerne.

Gegenüber herkömmlichen Hohlkörperausführungen wird dank der Verwendung eines Leichtbaukerns in Sandwichbauweise eine Gewichtsreduktion von bis zu 25% erreicht. Dies bei gleichzeitig höherer Steifigkeit.

Die Gewichtsreduktion wiederum führt zu einer Einsparung von Antriebsenergie. Ferner erlaubt die Gewichtsreduktion der Propellerflügel den Einsatz von kleiner dimensionierten Antriebs- und Lagereinheiten, d.h. von leistungsschwächeren Motoren, was eine weitere Reduktion der Betriebskosten mit sich bringt.

Durch die einteilige Ausbildung des Propellerblattes weist dieses eine vollständig geschlossene, wasserdichte Oberfläche auf. Das Propellerblatt enthält zudem keinen Hohlraum, welcher die Aufnahme von Wasser ermöglicht.

Die Oberfläche ist überdies reibungsarm, strömungsgünstig, so dass sich der Propollerflügel durch einen hohen aerodynamischen Wirkungsgrad auszeichnet. Zwecks Verbesserung der vorgenannten Eigenschaften sowie zur Verbesserung des optischen Erscheinungsbildes kann auf die Flügeloberfläche ein Gelcoat bzw. eine Feinschicht aus einem Kunststoff aufgetragen werden. Das Gelcoat zeichnet sich dadurch aus, dass es die oberste schützende Schicht am Bauteil ist und insbesondere keine Verstärkungsfasern enthält. Die Feinschicht kann eingefärbt sein. Eine Lackierung ist in der Regel nicht mehr notwendig.

Der erfindungsgemäss hergestellte Propellerflügel ist korrosions-, witterungs- und UV-beständig. Dank dem Einsatz eines Leichtbaukerns entstehen keine lokalen Resonanzerscheinungen in der Flügelwand. Die Sandwichbauweise, mit hoher Eigendämpfung zeichnet sich daher durch einen leisen Betrieb aus.

Der Ventilator enthält in der Regel mehrere, vorzugsweise drei oder vier, radial um eine Halterung befestigte Propellerflügel.

Die Propellerflügel sind bevorzugt an eine Halterung befestigt, welche zwei Grundelemente umfasst, wobei der Schaft des Propellerflügels zwischen den Grundelementen angeordnet und über Fixierelemente, insbesondere Klemmelemente, mit der Halterung verbunden ist. Der besagte Schaft ist bevorzugt klemmend zwischen den beiden Grundelementen eingespannt.

Die Grundelemente sind direkt oder indirekt an eine Antriebswelle gekoppelt. Die beiden Grundelemente sind bevorzugt spiegelsymmetrisch zueinander ausgebildet und können bsp. aus scheibenförmigen Ring- oder Plattenelementen mit oder ohne Ausnehmungen bestehen. Die gesamte Halterungsvorrichtung ist bevorzugt hinsichtlich einer senkrecht zur Rotationsachse des Propellers angeordneten Ebene im wesentlichen oder vollkommen spiegelsymmetrisch aufgebaut, so dass die Hauptträgheitsachse der Halterung möglichst mit der Drehachse übereinstimmt.

Die Klemmelemente können als Schalenelemente, insbesondere als Halbschalen ausgebildet sein, welche den Flügelschaft umgreifen und diesen in die Halterung einspannen. Die beiden Grundelemente sind bevorzugt mittels lösbaren Verbindungen, insbesondere mittels Schraubverbindungen, unter klemmender Fixierung des Flügelschaftes gegeneinander fixiert.

Die Fixierelemente können über dieselben lösbaren Verbindungen oder über separate lösbare oder nicht-lösbare Verbindungen mit dem diesen jeweils zugeordneten Grundelement verbunden sein. Die Fixierelemente können auch integraler Bestandteil der Grundelemente sein.

Die oben beschriebene Halterung erlaubt ein dynamisches Auswuchten des Propellers. Da die Propellerflügel eine hohe Eigendämpfung und verhältnismässig geringe Resonanzschwingungen im Betrieb sowie kleine Fertigungstoleranzen aufweisen, können Auswuchtgewichte direkt an den Grundelementen anstatt an den Propellerflügeln angebracht werden. Dieses Vorgehen vereinfacht das Auswuchten erheblich. Gleichzeitig arbeiten dynamisch ausgewuchtete Propeller verschleissarmer und sind weniger störungsanfällig als statisch ausgewuchtete Propeller mit Auswuchtgewichten an den Propellerflügeln.

Ventilatoren mit erfindungsgemäss hergestellten Propellerflügeln finden Verwendung in Wärmetauschern, insbesondere Rückkühlanlagen aller Art und in verschiedenster Grösse und Leistungsstufen, sowie zur Belüftung oder Klimatisierung von Bauten, insbesondere zur Klimatisierung von Gebäuden bzw. Räumen.

Im folgenden wird die Erfindung beispielhaft und mit Bezug auf die beiliegenden Zeichnungen näher erläutert, Es zeigen:
- Fig. 1a:: eine Draufsicht eines Propellerflügels;
- Fig. 1b:: einen Querschnitt durch einen Propollerflügel entlang der Linie A - A;
- Fig. 2:: eine perspektivische Ansicht eines Leichtbaukerns;
- Fig. 3:: eine Draufsicht eines Propellerflügels mit Verstärkungsbereichen;
- Fig. 4:: eine perspektivische Ansicht eines Leichtbaukemkerns mit Fasergele- gen;
- Fig. 5:: eine Draufsicht einer Stirnseite des Propellerflügels;
- Fig. 6;: ein mit Fasergelegen umhüllter Schaftbereich eines Propellerflügels;
- Fig. 7a-c:: eine schematische Darstellung eines RTM-Verfahrens;
- Fig. 8:: eine Seitenansicht eines Propellerflügels;
- Fig. 9:: einen Querschnitt durch einen Propellerflügel entlang der Linie B - B;
- Fig. 10:: eine Draufsicht eines Propellers;
- Fig. 11:: einen vergrösserten Ausschnitt eines Propellerschaftes;
- Fig. 12:: eine Halterung zur Befestigung der Propellerflügel,

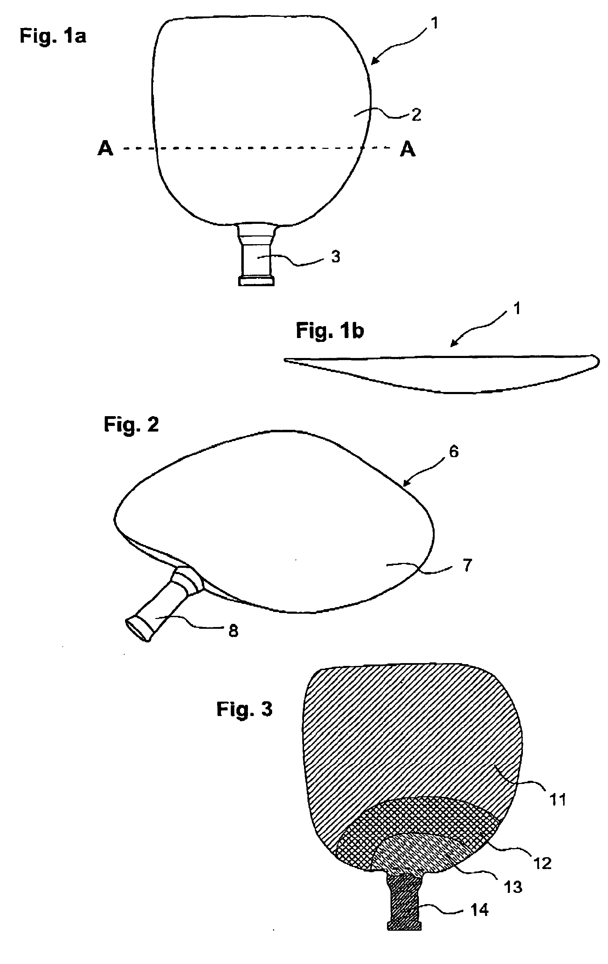

Der integrale Propellerflügel 1 gemäss Fig. 1 a und 1b besteht aus einem Propellerblatt 2 und einem Propellerschaft 3. Der Propellerflügel 1 enthält einen Leichtbaukem 6 (Fig, 2), welcher im wesentlichen die um die Flügelwanddicke reduzierten Abmessungen des Propellerflügels 1 wiedergibt. Der Leichtbaukern 6 enthält ein Leichtbaukernblatt 7 und ein Leichtbaukemschaft 8.

Fig. 3 zeigt einen Propellerflügel mit vier gekennzeichneten Flügelwandzonen 11-14, welche sich durch unterschiedliche Wandstärken sowie durch eine unterschiedliche Anzahl von Faserlagen auszeichnen, wobei die Wandstärke von der Zone 11 zur Zone 14 in jedem Zonenübergang stufenweise zunimmt. Die Zonenübergänge im Leichtbaukem von Zone 11 zur Zone 12 und von Zone 12 zur Zone 13 zeichnen sich durch eine Stufe aus, welche eine Abtiefung in der Blattfläche ausbilden, Die Abtiefung ermöglicht eine Zunahme der Flügelwanddicke und somit das Einbringen zusätzlicher Faserlagen bei kontinuierlichem Verlauf der Propellerblattaussenfläche. Die Zonenstufen bilden in Draufsicht es Propellerflügels bevorzugt bogenförmige, in Richtung Propellerblatt konvexe Begrenzungslinien aus.

Die Stufe kann treppenartig oder als Neigungsfläche ausgebildet sein. Die Stufe weist bevorzugt gerundete Übergänge zwischen den Flächen mit unterschiedlichen Neigungen aus.

Die gegenüber dem Propollerblatt grössere Laminatdicke im Schaftbereich soll eine genügend grosse Festigkeit hinsichtlich der auf diesen wirkenden Klemmkräfte sowie hinsichtlich der im Betrieb wirkenden Zug- und Biegekräfte garantieren, ohne dass zusätzliche Verstärkungshülsen im Schaftbereich eingesetzt werden müssen.

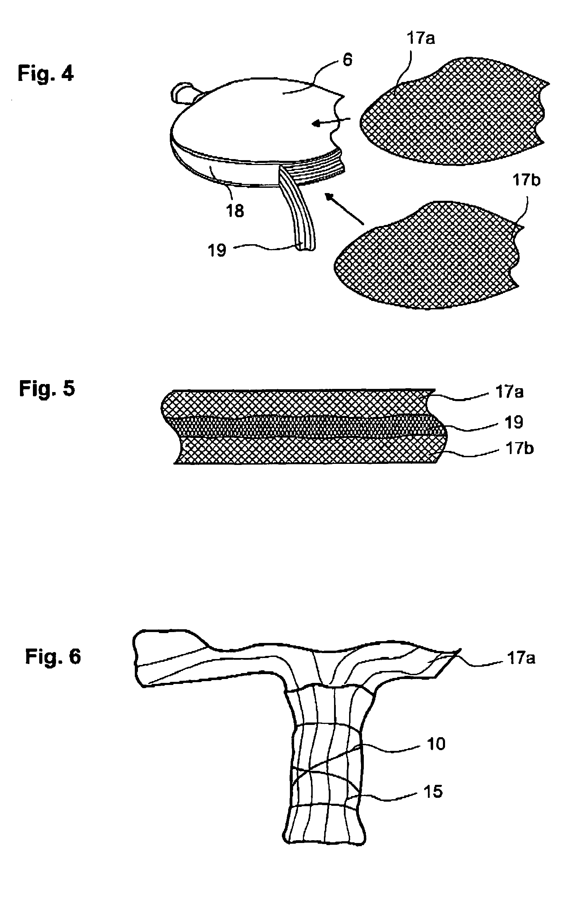

Fig. 4 bis 6 zeigen die Belegung des Leichtbaukerns mit textilen Faserlagen. Der Leichtbaukern wird in einem ersten Schritt auf seiner Stirnseite mit einer oder mehreren textilen Faserlagen in Form eines Bandes 19 belegt. Das Band wird hierzu bevorzugt in eine stirnseitig angelegte, nutförmige Ausnehmung 18 eingelegt. Die Deckflächen werden anschliessend mit einer bzw. mehreren oberen 17a und unteren 17b textilen Faserlagen belegt, wobei in den Verstärkungszonen 12 und 13 zusätzliche textile Faserlagen eingelegt werden. Eine oder mehrere untere und/oder obere Decklagen 17a, 17b werden in die Stirnseite des Propellerblattes gefaltet und bilden mit dem stirnseitig angelegten Textilband 19 einen Überlappungsbereich aus (Fig. 5).

Der Propellerschaft wird mit einem mehrlagigen Schlauchgelege 15 umhüllt, welches mit den oberen und/oder unteren Decklagen 17a, 17b und/oder den stirnseitigen Faserbändem 19 einen Überlappungsbereich ausbilden (Fig. 6). Die Fasergelege werden jeweils verrutschsicher an den Leichtbaukem fixiert, wobei das Schlauchgelege bevorzugt mit einem Befestigungsfaden 10 am Schaft fixiert wird.

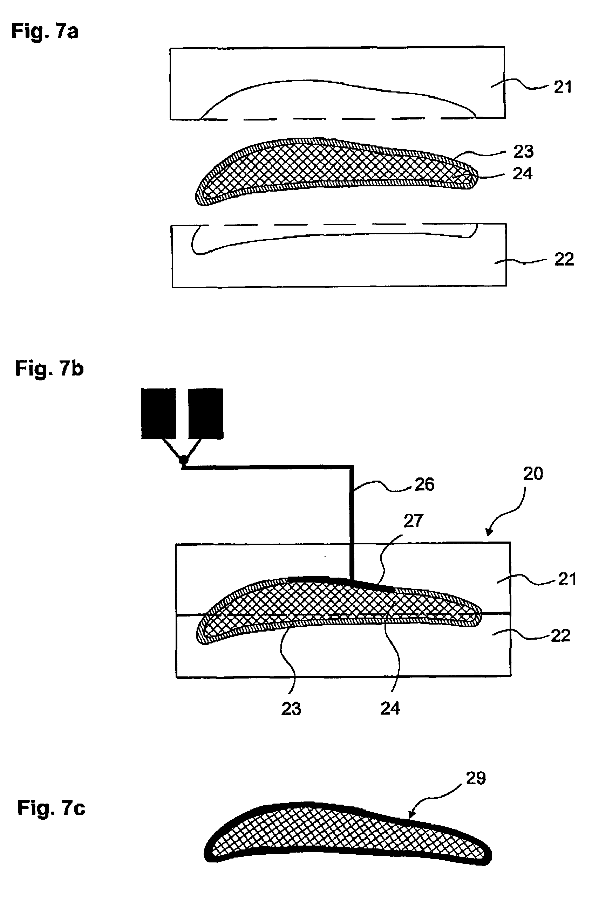

Fig. 7a bis 7c zeigen schematisch ein RTM-Verfahren zur Herstellung eines Propellerflügels. Ein mit textilen Fasergebilden 23 belegter Leichtbaukem 24 wird in ein zweiteiliges Formwerkzeug 20 mit einer oberen 21 und unteren 22 Formwerkzeughälfte eingelegt. In das geschlossene Formwerkzeug 20 wird über einen oder mehrere Einlässe 26 ein reaktives Kunststoffharz 27 in die Werkzeugkavität injiziert.

Nach Abschluss der Formfüllung und Verfestigung der Kunststoffmatrix wird der formstabile Propellerflügel 29 entformt und durch Tempern vollständig ausgehärtet.

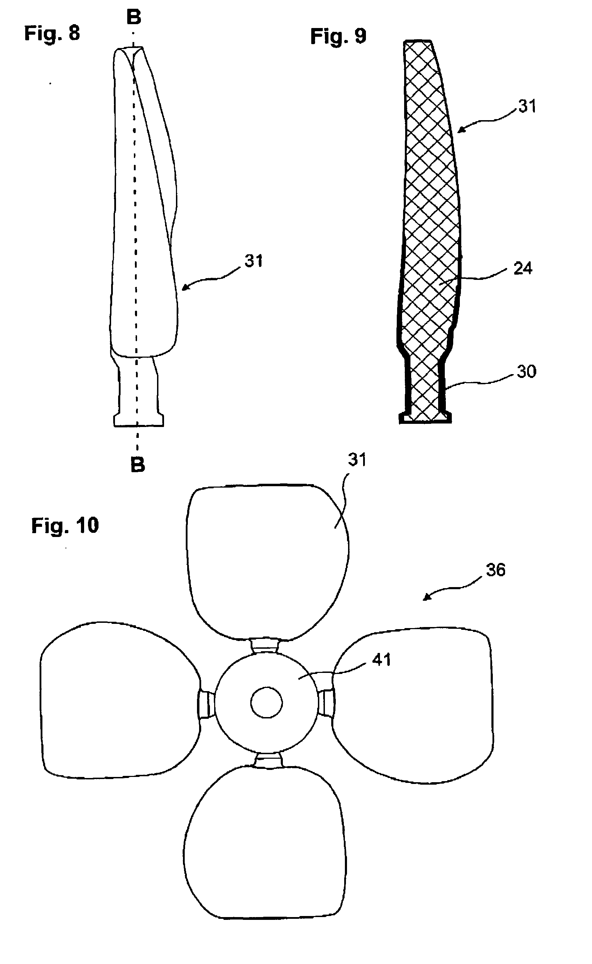

Fig. 8 zeigt eine Seitenansicht eines Propelterflügels 31. Dieser ist in Fig. 9 in Querschnittsansicht entlang der Linie B - B dargestellt. Der Leichtbaukem 24 ist vollständig mit einer Flügelwand 30 aus faserverstärktem Kunststoff umgeben, wobei die Flügelwand 30 vier Zonen mit unterschiedlicher Laminatdicke und einer unterschiedlichen Anzahl textiler Faserlagen umfasst. Die Laminatdicke nimmt dabei zum Propellerschaft hin stufenweise zu.

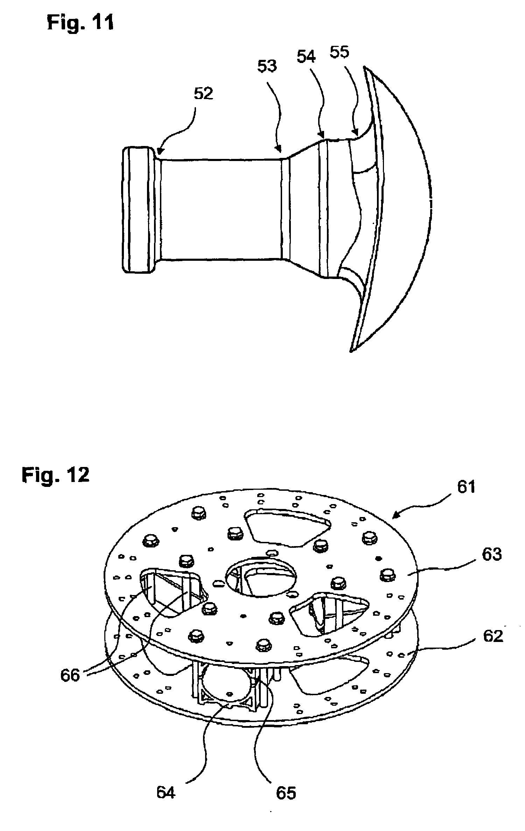

Aus fertigungstechnischen und mechanischen Gründen, d.h. zur Verhinderung von lokalen Spannungsspitzen und zur Gewährleistung einer vollständigen Durchtränkung der Faserlagen, sind bei Übergängen, insbesondere im Schaftbereich (Fig. 11), anstelle von scharfen Kanten grosszügige Radien 52, 53, 54, 55 vorgesehen. So ist bsp. im Übergangsbereich zwischen Propellerschaft und Propellerblatt ein Übergangsradius von 40 bis 60 mm vorgesehen.

Die Halterung 61 gemäss Fig. 12 enthält zwei scheibenförmige Grundplatten 62, 63, zwischen welchen jeweils aus zwei Halbschalen 64, 65 gebildete Klemmelemente zur Aufnahme eines Flügelschaftes angeordnet sind.

Die beiden Grundplatten 62, 63 sind über Bolzenschrauben 66, welche durch Ausnehmungen in den Grundplatten geführt und mittels Sicherungsmuttern festgezogen sind, gegeneinander verschraubt, wobei der Propellerschaft (nicht gezeigt) in den Halbschalen klemmend fixiert ist.

Die Grundplatten enthalten jeweils eine zentrale, konzentrische Ausnehmung zur Aufnahme einer Antriebswelle. Weitere Ausnehmungen in den Grundplatten dienen der Aufnahme der Schraubverbindungen.

## Patentansprüche

1. Propellefflügel (1) eines Ventilators enthaltend ein Propellerblatt (2) und einen Propellerschaft (3) aus einem faserverstärkten Kunststoff, wobei der Propeller flügel (1) ein einteiliges Integralbauteil mit einer, eine Kammer ausbildenden Flügelwand (30) aus faserverstärktem Kunststoff und einem die Kammer füllenden Leichtbaukern (24) ist, wobei der Propellerflügel (1) zum Propellerschaft (3) hin durch eine kontinuierliche oder stufenweise Zunahme der Flügelwanddicke und Zunahme der Faserlagen In der Flügelwand verstärkt ist,
**dadurch gekennzeichnet, dass**
der Propellerschaft (3) mit einem mehrlagigen Schlauchgelege (15) umhüllt ist, welches mit oberen und/oder unteren Decklagen (17a, 17b) und/oder stirnseitigen Faserbändern (19) einen Überlappungsbereich ausbildet.

2. Verfahren zur Herstellung eines Ventiiatoren-Propellerflügeis (1) gemäss Anspruch 1,
**dadurch gekennzeichnet, dass**
der Propellerflügel (1) mittels eines Harz-Injektions-Verfahrens als einteiliges Integralbauteil mit einer eine Kammer ausbildenden Flügelwand (30) aus faserverstärktem Kunststoff und einem die Kammer ausfüllenden Leichtbaukern (24) gefertigt wird, wobei die Werkzeugkavität eines mehrteiligen Formwerkzeuges (20) mit einem mit konfektionierten Fasergebllden belegten (15, 17a, 17b, 19) Leichtbaukem (6) beschickt und das Formwerkzeug (20) geschlossen und in die Werkzeugkavität unter Ausbildung der Flügelwand eine fliessfähige, das Fasergebilde (15, 17a, 17b, 19) durchtränkende Kunststoffmatrix (26) injiziert, und das formstabil verfestigte Bauteil anschliessend entformt wird.

3. Verfahren nach Anspruch 2, wobei der Leichtbaukern (6) eine im wesentlichen den Propellerflügel (1) wiedergebende Form mit einer gegenüber dem Propellerflügel (1) um das Mass der Flügelwand (30) reduzierten Abmessung aufweist.

4. Verfahren nach einem der Ansprüche 2 oder 3, wobei die Stirnseite des Leichtbaukerns mit einem konfektionierten Faserstreifen (19) in Form eines textilen Flächengebildes belegt wird und die Ober- und Unterseite des Leichtbaukernblattes (7) unter Ausbildung von Überlappungsbereichen mit dem Faserstreifen (19) jeweils mit einem konfektionierten, textilen Flächengebilde (17a, 17b) belegt werden.

5. Verfahren nach Anspruch 4, wobei der Faserstreifen (19) in eine nutförmige Vertiefung (18) im Leichtbaukern (6) eingelegt wird.

6. Verfahren nach einem der Ansprüche 2 bis 5, wobei der Leichtbaukern (8) unter Ausbildung eines Überlappungsbereichs mit den Fasorclecklagen (17a, 17b) und/oder den Faserstreifen (19) mit einem konfektionierten Schlauchgelege (15) in Form eines textilen Flächengebildes eingefasst wird.

7. Verfahren nach einem der Ansprüche 2 bis 6, wobei das Schlauchgelege (15) mehrere textile Faserlagen umfasst.

8. Verfahren nach einem der Ansprüche 2 bis 7, wobei der Leichtbaukern (6) aus einem Schaumstoff ist.

## Claims

1. Propeller vane (1) of a ventilator comprising a propeller blade (2) and a propeller shaft (3) made of a flbre-reinforcad plastics material, the propeller vane (1) being a one-piece integral component comprising a vane wall (30), which forms a chamber and is made of fibre-reinforced plastics material, and a lightweight core (24) which frills the chamber, the propeller vane (1) being reinforced towards the propeller shaft (3) by a continuous or stepwise increase in the vane wall thickness and increase in the fibre layers In the vane wall, **characterised in that** the propeller shaft (3) is enveloped by a multi-layer tubular non-woven fabric (15) which forms a region of overlap with upper and/or lowar cover layers (17a, 17b) and/or end-face fibre bands (19).

2. Method for producing a ventilator propeller vane (1) according to claim 1, **characterised in that** the propeller vane (1) is produced by means of a resin injection method as a one-piece Integral component comprising a vane wall (30), which forms a chamber and is made of fibre-reinforced plastics material, and a lightweight core (24) which fills the chamber, the mould cavity of a multi-part mould (20) being loaded with a lightweight core (6) coated with ready-made fibre formations (16, 17a, 17b, 19) and the mould (20) being closed and a free-flowing polymer matrix (26) which impregnates the fibre formation (16, 17a, 17b, 19) being injected Into the mould cavity, the vane wall being formed, and the component, hardened in a dimensionally stable manner, subsequently being removed from the mould.

3. Method according to claim 2, wherein the lightweight core (6) has a form substantially reproducing the propeller vane (1) and having a measurement reduced relative to the propeller vane (1) by the mese of the vane wall (30).

4. Method according to either claim 2 or claim 3, wherein the end face of the lightweight core is coated with a ready-made fibre strip (18) In the form of a textile fabric and the upper and lower faces of the lightweight core blade (7) are each coated with a ready-made textile fabric (17a, 17b), regions of overlap with the fibre strip (19) being formed.

5. Method according to claim 4, wherein the fibre strip (19) is laid In a groove-shaped recess (18) in the lightweight core (6).

6. Method according to any one of claims 2 to 5, wherein the lightweight core (8) is surrounded by a ready-made tubular non-woven fabric (15) in the form of a textile fabric, a region of overlap with the fibre cover layers (17a, 17b) and/or the fibre strip (19) being formed.

7. Method according to any one of claims 2 to 6, wherein the tubular non-woven fabric (15) comprises a plurality of fibre layers.

8. Method according to any one of claims 2 to 7, wherein the lightweight core (6) is made of a foam.

## Revendications

1. Pale d'hélice (1) d'un ventilateur, comprenant une lame de pale (2) et un axe de pale (3) en matière plastique renforcée de fibres, ladite pale d'hélice (1) étant une pièce intégrée formée d'un seul tenant avec une paroi de pale (30) en matière plastique renforcée de fibres qui forme un compartiment et un noyau de construction légère (24) qui remplit le compartiment, ladite pale d'hélice (1) étant renforcée vers l'axe de pale (3) par augmentation continue ou par degrés de l'épaisseur de ,la paroi de pale et par augmentation des couches de fibres dans la paroi de pale,
**caractérisée**
**en ce que** l'axe de pale (3) est enveloppé d'une gaine non tissée à plusieurs couches (15) qui forme une zone de chevauchement avec des couches de couverture (17a, 17b) supérieure et/ou inférieure et/ou des rubans de fibres (19) frontaux.

2. Procédé de fabrication d'une pale d'hélice (1) de ventilateur selon la revendication 1,
**caractérisé**
**en ce que** la pale d'hélice (1) est fabriquée au moyen d'un procédé à injection de résine, en tant que pièce intégrée formée d'un seul tenant avec une paroi de pale (30) en matière plastique renforcée de fibres qui forme un compartiment et un noyau de construction légère (24) qui remplit le compartiment, la cavité d'un outil de moulage (20) formé de plusieurs pièces étant chargée d'un noyau de construction légère (6) garni de produits fibreux (15, 17a, 17b, 19) confectionnés, l'outil de moulage (20) étant refermé, une matrice plastique (26) liquide imprégnant le produit fibreux (15, 17a, 17b, 19) étant injectée dans la cavité de l'outil en formant la paroi de pale, et le composant solidifié avec une forme stable étant ensuite démoulé.

3. Procédé selon la revendication 2, où le noyau de construction légère (6) présente une forme reproduisant sensiblement la pale d'hélice (1) avec une dimension réduite de la cote de la paroi de pale (30) par rapport à la pale d'hélice (1).

4. Procédé selon l'une des revendications 2 ou 3, où le côte frontal du noyau de construction légère est garni avec un ruban de fibres (19) confectionné ayant la forme d'un produit de surface textile, et où le côté supérieur et le côté inférieur de la lame (7) à noyau de construction légère sont garnis chacun d'un produit de surface textile (17a, 17b) confectionné en formant des zones de chevauchement avec le ruban de fibres (19).

5. Procédé selon la revendication 4, où le ruban de fibres (19) est inséré dans un évidement en rainure (18) du noyau de construction légère (6).

6. Procédé selon l'une des revendications 2 à 5, où le noyau de construction légère (8) est bordé d'une gaine non tissée (15) confectionnée ayant la forme d'un produit de surface textile, en formant une zone de chevauchement avec les couches de fibres de couverture (17a, 17b) et/ou le ruban de fibres (19).

7. Procédé selon l'une des revendications 2 à 6, où la gaine non tissée (15) comprend plusieurs couches de fibres textiles.

8. Procédé selon l'une des revendications 2 à 7, où le noyau de construction légère (6) est en matière plastique cellulaire.
